# EUROPÄISCHE PATENTSCHRIFT

(11) **EP 2 353 903 B1**
(45) Veröffentlichungstag und Bekanntmachung des Hinweises auf die Patenterteilung: **11.01.2017**
(21) Anmeldenummer: 10014592.9
(22) Anmeldetag: 13.11.2010
(51) Int. Cl.: B60J 1/02, B60R 13/07, B60J 1/20, B62D 35/00

(54) **Fensterrahmen einer KFZ-Windschutzscheibe mit beweglichem Verkleidungselement zur Wasserableitung**
Vehicle windshield frame with movable cladding element for water drainage
Cadre d'une pare-brise de véhicule muni d'un élément d'habillage pour conduite de sortie d'eau

(30) Priorität: 22.01.2010 DE 102010005374
(43) Veröffentlichungstag der Anmeldung: 10.08.2011
(73) Patentinhaber: MAN Truck & Bus AG, 80995 München (DE)
(72) Erfinder: Ochs, Thomas, 82178 Puchheim (DE)
(74) Vertreter: v. Bezold & Partner Patentanwälte - PartG mbB

(56) Entgegenhaltungen:
- EP-A1- 0 347 485
- DE-A1- 3 119 358
- DE-A1- 3 936 372
- DE-A1- 4 307 303
- DE-A1-102004 042 703
- DE-B3-102005 058 045

## Beschreibung

### Technisches Gebiet:

Die Erfindung betrifft einen Fensterrahmen zur Befestigung einer Fahrzeugfrontscheibe an einer Fahrzeugkarosserie, der jeweils seitlich eines Fensterausschnitts angeordnete Seitenholme, ein oberhalb des Fensterausschnitts angeordneten oberen Querholm sowie einen unterhalb des Fensterausschnitts angeordneten unteren Querholm aufweist. An wenigstens einem Seitenholm ist ein Verkleidungselement vorgesehen ist, das zumindest bereichsweise einen Übergangsbereich zwischen Fahrzeugfrontscheibe und Seitenholm überdeckt und wenigstens zeitweise eine zumindest wirbelarme Umströmung des Übergangsbereichs durch von der Fahrzeugfrontscheibe seitwärts abströmenden Fahrtwind gewährleistet.

### Stand der Technik:

DE 31 19358 A1 betrifft eine im Bereich einer Windschutzsäule befestigte Wasserfangleiste für Kraftwagen, die mindestens eine Staulippe in Form eines mit einem freien Ende versehenen Schenkels aufweist, der zusammen mit anderen Teilen der Wasserfangleiste und/oder der Karosserie, wie z. B. der Windschutzscheibe, eine Wasserfangrinne für von der Windschutzscheibe seitlich abströmendes Schmutzwasser bildet, wobei das freie Ende des Schenkels durch Be- und Entlüften einer Druckkammer ausfahrbar oder an angrenzende Bauteile der Wasserfangleiste oder der Karosserie heranbewegbar und anlegbar ist, und die Druckkammer an einer Seite von einem verformbaren Wandbereich begrenzt ist, der im Sinne eines Ein- oder Ausschwenkens auf den Schenkel einwirkt.

Die gattungsgemäße EP 0 347 485 A1 offenbart eine Wasserfangeinrichtung für Fahrzeuge, deren Wasserfangleiste in eine gegenüber der Außenkontur des Fahrzeuges nicht vorstehende Nichtgebrauchsstellung bewegbar ist. Das die Wasserfangleiste aufnehmende Bauteil ist durch ein im Strangpressverfahren aus Leichtmetall hergestelltes Hohlprofil gebildet, welches zur Aufnahme von Halteteilen der Wasserfangleiste mit einer rinnenförmigen Profilierung versehen ist. Das Hohlprofil wird als Versorgungsleitung für ein Fluid herangezogen, durch welches die Wasserfangleiste in ihre Wirkstellung und/oder Ruhestellung bewegbar ist. DE 43 07 303 A1 offenbart weiteren technologischen Hintergrund, insbesondere ein Elastomerprofil, das mittels eines Filmscharniers an einer Leiste angeformt ist.

Um einen möglichst wirtschaftlichen und umweltverträglichen Betrieb von Kraftfahrzeugen sicherzustellen, ist es von besondere Bedeutung, die Fahrzeugkarosserie unter Berücksichtigung des Luftwiderstands zu gestalten. Aus diesem Grund werden die einzelnen Außenhautbauteile einer Fahrzeugkarosserie derart ausgeführt, dass ein Strömungsabriss und die damit verbundenen Verwirbelungen, insbesondere an umströmten Eck- bzw. Kantenbereichen, zumindest weitgehend vermieden werden. Vor allem im Frontbereich eines Fahrzeugs, der direkt vom Fahrtwind angeströmt wird, ist die konstruktive Gestaltung der in diesem Bereich angeordneten Außenhautbauteile von großer Bedeutung.

Wesentliche im Frontbereich von Kraftfahrzeugen vorgesehene Bauteile stellen die Seitenholme der Fahrzeugfrontscheiben, insbesondere die Fahrzeug-A-Säulen, dar. An diesen Seitenholmen wird üblicherweise einerseits die Fahrzeugscheibe befestigt, andererseits dienen diese Seitenholme der Ableitung von Wasser, das seitlich von der Fahrzeugfrontscheibe abströmt.

In diesem Zusammenhang ist aus der DE 10 2004 060 500 A1 eine im Bereich der A-Säule vorgesehene Wasserfangleiste bekannt. Die Wasserfangleiste ist zwischen der A-Säule und der Fahrzeugfrontscheibe angeordnet und verfügt über einen mindestens aus einer Kante und der Frontscheibe ausgebildeten Wasserfangkanal, wobei dieser Kanal mit einer zusätzlichen Rinne ausgestattet ist. Mit einem derart ausgeführten Wasserfangkanal soll sichergestellt werden, dass von der Frontscheibe ablaufendes Wasser zuverlässig nach oben oder unten abgeleitet wird und somit nicht auf die Seitenscheibe des Fahrzeugs gelangt.

Des Weiteren ist aus der DE 10 2004 042 703 A1 eine Wasserfangleiste bekannt, die an einer Fahrzeug-A-Säule im Bereich der Windschutzscheibe angeordnet ist und sicherstellen soll, dass der Seitenbereich des Fahrzeugs von durch die Windschutzscheibe abgelenktem Schmutzwasser freigehalten wird. Die beschriebene Wasserfangleiste kann in diesem Fall zwischen zwei Stellungen hin und her bewegt werden. Wahlweise liegt die Wasserfangleisten an der Fahrzeugfrontscheibe an oder sie wird derart von der Fahrzeugfrontscheibe abgehoben, dass ein Kanal zur Abführung des von der Windschutzscheibe abströmenden Wassers freigegeben wird. Auf diese Weise wird eine Abführung für das von der Windschutzscheibe zur Wasserfangleiste hin abfließende Schmutzwasser immer dann erreicht, wenn sich Feuchtigkeit auf der Scheibe befindet, während die Leiste in der übrigen Zeit an der Frontscheibe anliegt.

Bei der Konstruktion der beschriebenen Wasserrinnen ist zu berücksichtigen, dass diese in der Regel ein Strömungshindernis für den die Seitenholme, insbesondere die Fahrzeug-A-Säulen, umströmenden Fahrtwind darstellen. Hierbei stellen die zuvor beschriebenen stationären Systeme zu jedem Zeitpunkt ein Strömungshindernis dar, während Lösungen, die bewegliche Wasserfangleisten aufweisen, zwar nur im Bedarfsfall ein Strömungshindernis darstellen, dafür aber über eine vergleichsweise aufwendige Konstruktion verfügen und störanfällig sind. Vor allem aufgrund der Öffnungsbewegung gegen die Strömungsrichtung des Fahrtwindes besteht bei Eisbildung und/oder Verschmutzung die Gefahr, dass der Bewegungsmechanismus beschädigt wird. Darüber hinaus neigen beweglich angeordnete Wasserfangleisten dazu, dass sich Schmutz und/oder Eis unterhalb der Fangleiste sammeln, so dass die Wasserfangleiste letztendlich nicht mehr in geeigneter Weise an der Fahrzeugfrontscheibe anliegt und somit einen nicht unerheblichen Strömungswiderstand bildet.

Ausgehend von dem bekannten Stand der Technik und den zuvor geschilderten Problemen liegt der Erfindung die Aufgabe zugrunde, eine Einrichtung anzugeben, mit der einerseits eine zuverlässige Abführung des von der Fahrzeugfrontscheibe seitlich abströmenden Wassers gewährleistet wird und andererseits bei trockener Fahrzeugfrontscheibe eine gute Umströmung der Seitenholme, insbesondere der Fahrzeug- A-Säulen, sichergestellt wird. Die Einrichtung zur Wasserableitung soll ferner robust und unanfällig gegen Störungen, insbesondere Eis- und Schmutzpartikel, sein. Weiterhin soll die anzugebende technische Lösung mit verhältnismäßig geringem Aufwand im Übergangsbereich zwischen einer Fahrzeugfrontscheibe und einem die Fahrzeugscheibe begrenzenden Seitenholm, insbesondere einer Fahrzeug-A-Säule, integrierbar sein.

Die zuvor geschilderte Aufgabe wird mit einem Fensterrahmen gemäß Anspruch 1 gelöst. Vorteilhafte Weiterbildungen der Erfindung sind Gegenstand der abhängigen Ansprüche und werden in der folgenden Beschreibung unter teilweiser Bezugnahme auf die Figuren näher erläutert.

Erfindungsgemäß ist ein Fensterrahmen zur Befestigung einer Fahrzeugfrontscheibe an einer Fahrzeugkarosserie, der jeweils seitlich eines Fensterausschnitts angeordnete Seitenholme, einen oberhalb des Fensterausschnitts angeordneten oberen Querholm sowie einen unterhalb des Fensterausschnitts angeordneten unteren Querholm aufweist, wobei an wenigstens einem Seitenholm ein Verkleidungselement vorgesehen ist, das zumindest bereichsweise einen Übergangsbereich zwischen Fahrzeugfrontscheibe und Seitenholm überdeckt und wenigstens zeitweise eine zumindest wirbelarme Umströmung des Übergangsbereichs und/oder des Seitenholms durch von der Fahrzeugfrontscheibe seitwärts abströmenden Fahrtwind gewährleistet, derart weitergebildet worden, dass das Verkleidungselement im Anströmbereich des Fahrtwindes einen zumindest weitgehend konstanten Abstand zur Fahrzeugfrontscheibe aufweist, wenigstens teilweise beweglich angeordnet ist und derart gelagert ist, dass es aus einer ersten Position, die eine zumindest wirbelarme Umströmung des Übergangsbereichs sicherstellt, in eine zweite Position, die einen Strömungsabriss des seitwärts abströmenden Fahrtwinds hervorruft, überführbar ist.

Mit der erfindungsgemäßen technischen Lösung wird einerseits eine glatte Umströmung des Übergangsbereichs zwischen Fahrzeugfrontscheibe und Seitenholm sowie des Seitenholms selbst erreicht, andererseits wird bei Nässe, Regen oder Schnellfall sichergestellt, dass von der Fahrzeugfrontscheibe seitlich abströmendes Wasser von einer benachbarten Seitenscheibe ferngehalten wird. Dies wird vor allem dadurch erreicht, dass es im Bereich des Verkleidungselements zu einem Abriss der Fahrtwindströmung, insbesondere einer Wirbelbildung, kommt und das Wasser seitlich von der Fahrzeugfrontscheibe weggedrückt wird. Auf bevorzugte Weise ist das beweglich gelagert Verkleidungselement bei trockener Witterung in seiner ersten Position eben in die Fahrzeugaußenhaut integriert, während es sich bei Vorhandensein von Feuchtigkeit auf der Frontscheibe und/oder Nutzung des Scheibenwischers zumindest abschnittsweise aus der Fahrzeugaußenhaut abhebt. In diesem Zusammenhang ist es grundsätzlich denkbar, dass die zweite Position des Verkleidungselements nicht konstant ist, sondern in Abhängigkeit bestimmter Fahrzeugparameter, beispielsweise der Fahrzeuggeschwindigkeit, variiert wird.

In einer bevorzugten Ausführungsform ist das Verkleidungselement zumindest abschnittsweise aus flexiblen Material hergestellt. Hierbei sind vorzugsweise Bewegungsmittel vorgesehen, die das flexible Material derart bewegen, dass bei Vorhandensein von Feuchtigkeit auf der Fahrzeugfrontscheibe aufgrund von Regen, Nebel, Schneefall oder Nässe, etwa durch Spritzwasser, das Verkleidungselement in eine Position bewegt wird bzw. in eine Form überführt wird, die zu einem Strömungsabriss und Verwirbelung der Fahrtwindströmung im Bereich des Verkleidungselements führt. In diesem Zusammenhang ist es bevorzugt denkbar, dass das flexible Material, insbesondere bei Anlegen einer elektrischen Spannung, seine Form verändert und / oder das geeignete Aktoren vorgesehen sind, beispielsweise Piezoaktoren, die bei Anlegen einer Spannung das flexible Material in eine den Abriss der Fahrtwindströmung verursachende Position überführen.

Eine spezielle Weiterbildung der Erfindung sieht ferner vor, dass das Verkleidungselement wenigstens ein Gelenk aufweist. Hierbei wird das Verkleidungselement bei Auftreten von Feuchtigkeit auf der Fahrzeugfrontscheibe, insbesondere bei Regen, Nebel, sonstiger Nässe oder Schneefall derart im Gelenk bewegt, dass wiederum der Abriss und Verwirbelung der Fahrtwindströmung erreicht wird. Vorteilhafter Weise wird das Gelenk derart angeordnet, dass die Form des Verkleidungselements im Bedarfsfall Unstetigkeitsstelle aufweist. Unter Unstetigkeitsstelle wird in diesem Zusammenhang ein Bereich oder ein Punkt verstanden, in dem sich die Außenkontur des Verkleidungselements in diskontinuierlicher Weise ändert. In besonders geeigneter Weise handelt es sich hierbei um einen Knick oder eine Kante, die ein sich in seiner zweiten Position befindliches Verkleidungselement an seiner Außenfläche aufweist.

Auf vorteilhafte Weise ist im Zusammenhang mit der Erfindung vorgesehen, dass ein Sensor zur Erfassung eines Zustandsparameters der Fahrzeugscheibe vorhanden ist und das Verkleidungselement unter Zugrundelegung des erfassten Zustandsparameters zwischen der ersten Position und der zweiten Position hin und / oder her bewegbar ist. Vorzugsweise ist der Sensor im Bereich der Fahrzeugscheibe, insbesondere an oder in der Scheibe montiert. Eine besondere Weiterbildung des erfindungsgemäßen Gedankens zeichnet sich hierbei dadurch aus, dass als Sensor ein Feuchtigkeitssensor vorgesehen ist, der, sobald Feuchtigkeit auf der Fahrzeugfrontscheibe vorhanden ist, ein entsprechendes Signal generiert, welches der Bewegung des Verkleidungselements aus der ersten in die zweite Position zugrunde gelegt wird. Alternativ oder in Ergänzung hierzu ist es ebenfalls denkbar, dass die erfindungsgemäße Bewegung des Verkleidungselementes durch das Betätigen eines Schaltelements durch den Fahrzeugführer initiiert wird. Hierbei ist es auf vorteilhafte Weise denkbar, dass eine Bewegung des Verkleidungselements aus der ersten in die zweite Position erfolgt, sobald der Fahrzeugführer den Scheibenwischer und / oder eine Fahrzeugfrontscheibenheizung der Fahrzeugfrontscheibe, an deren wenigstens einem Seitenholm das erfindungsgemäß ausgeführte Verkleidungselement vorgesehen ist, betätigt.

Ein erfindungsgemäß ausgeführter Fensterrahmen dient vorzugsweise der Aufnahme der Windschutzscheibe eines Fahrzeugs. Ebenfalls ist es denkbar, dass andere Fahrzeugfrontscheiben, beispielsweise im oberen Bereich eines Doppelstockbusses angeordnete Frontscheiben, über ein erfindungsgemäß ausgeführtes Verkleidungselement verfügen. In jedem Fall soll durch die Erfindung sichergestellt werden, dass Feuchtigkeit, die sich auf einer Frontscheibe befindet und oftmals Schmutz enthält, nicht durch die Fahrtwindströmung um einen Seitenholm, insbesondere die Fahrzeug-A-Säule, herumgeleitet wird und auf eine Seitenscheibe gelangt. Dies ist insbesondere von Bedeutung, um das seitliche Blickfeld von Fahrzeuginsassen, insbesondere des Fahrzeugführers, auf den Seitenbereich des Fahrzeugs und / oder die Seitenspiegel nicht zu erschweren.

Eine spezielle Weiterbildung der Erfindung sieht vor, dass das Verkleidungselement im vorderen, vom Fahrtwind angeströmten Bereich ein vorderes Lager aufweist. Die Bewegung des Verkleidungselements aus der ersten in die zweite bzw. aus der zweiten in die erste Position erfolgt in diesem Fall somit relativ zu dem ersten Lager.
Bei dem ersten Lager handelt es sich vorzugsweise um ein zweiwertiges Lager. Darüber hinaus weist das Verkleidungselement in seinem, in Bezug auf die Strömungsrichtung des Fahrtwindes hinteren Bereich ein hinteres Lager auf, wobei das Verkleidungselement seine Position bei einer Bewegung relativ zu diesem verändert.

Erfindungsgemäß verfügt das Verkleidungselement über ein vorderes sowie ein hinteres Lager, zwischen denen eine Gelenk vorgesehen ist. Sobald Feuchtigkeit auf der Fahrzeugfrontscheibe detektiert worden ist oder der Fahrzeugführer einen entsprechenden Schalter betätigt hat, wird das Verkleidungselement hierbei derart bewegt, dass vorzugsweise das vordere Lager an seiner Position verbleibt, während sich das hintere Lager aufgrund der Bewegung des Gelenks zumindest linear bewegt. Wesentlich ist in jedem Fall, dass der Abstand zwischen der vorderen Anströmkante des Verkleidungselementes, also dem Bereich, auf den der seitlich von der Fahrzeugfrontscheibe abströmende Fahrtwind und ggf. das abströmende Wasser auftrifft, einen konstanten Abstand zur Fahrzeugfrontscheibe inne hat. Vorzugsweise liegt das Verkleidungselement in diesem Bereich an der Fahrzeugfrontscheibe an. Weiterhin ist in diesem Übergangsbereich zwischen Fahrzeugfrontscheibe und Seitenholm ein Dichtungselement, beispielsweise eine Gummidichtung, vorgesehen. Es findet somit keine Bewegung des vorderen Bereichs des Verkleidungselementes relativ zur Frontscheibe statt, so dass in jedem Fall sichergestellt wird, dass sich keine Partikel, insbesondere Schmutz und / oder Eis, zwischen dem Verkleidungselement und der Fahrzeugfrontscheibe anlagern, die eine Bewegung des Verkleidungselementes einschränken.

Das erfindungsgemäß ausgeführte Verkleidungselement befindet sich bei einer Fahrt unter trockenen Bedingungen innerhalb der Fahrzeugaußenwand, insbesondere sind die Übergänge zwischen dem Verkleidungselement und den angrenzenden Bauteilen zumindest weitgehend eben. Erst bei Benutzung des Scheibenwischers oder bei Detektion von Feuchtigkeit auf der Fahrzeugfrontscheibe mit Hilfe eines Feuchtigkeitssensors bewegt sich das Verkleidungselement aus einer ersten in eine zweite Position, so dass ein Abriss der Fahrtwindströmung und somit eine Wirbelbildung in diesem Bereich erreicht und die von der Fahrzeugfrontscheibe seitlich abströmende Feuchtigkeit vom Fahrzeug zur Seite weggedrückt wird. Auf diese Weise wird die Umströmung des Seitenholms einer Fahrzeugfrontscheibe, insbesondere einer Fahrzeug-A-Säule, nicht fortwährend gestört, sondern nur dann, wenn die Scheibe von Feuchtigkeit freigehalten werden muss. Das Verkleidungselement besteht wahlweise aus festem oder elastischem Material und ist derart ausgeführt, dass eine Vereisung der bewegten Teile sicher ausgeschlossen wird.

Im Folgenden wird die Erfindung anhand der Figuren ohne Beschränkung des allgemeinen Erfindungsgedankens näher erläutert. Es zeigen:
- Figur 1:: Verkleidungselement mit einem Gelenk im mittleren Bereich in erster, eingeklappter Position;
- Figur 2:: Verkleidungselement mit einem Gelenk im mittleren Bereich in zweiter, ausgeklappter Position sowie
- Figur 3:: nicht Teil der Erfindung, aber ein das Verständnis der Erfindung erleichterndes Verkleidungselement in einer Spoilerausführung in zweiter, ausgeklappter Position.

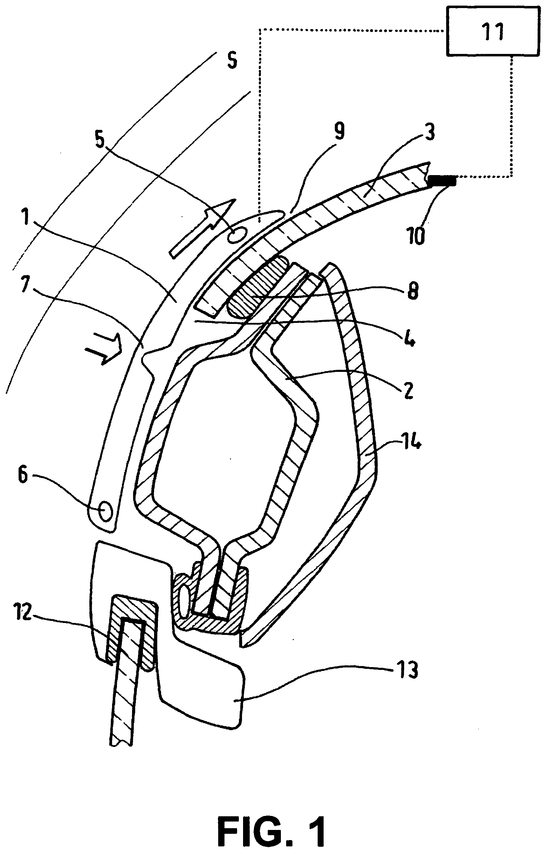

Figur 1 zeigt den horizontalen Schnitt durch den als Fahrzeug-A-Säule ausgeführten Seitenholm 2 sowie die Frontscheibe 3 (Windschutzscheibe) eines Kraftfahrzeugs in der Draufsicht. Das Verkleidungselement 1 ist derart angeordnet, dass es in einer ersten Position, die es bei trockenem Wetter, insbesondere wenn sich keine Feuchtigkeit auf der Frontscheibe 3 befindet, einnimmt. In der dargestellten Stellung des Verkleidungselements 1 wird eine zumindest wirbelarme, glatte Umströmung des Übergangsbereichs 4 zwischen Frontscheibe 3 und Seitenholm 2 sowie der als Fahrzeug-A-Säule ausgeführten Seitenholms 2 selbst gewährleistet. Eine derartige wirbelarme Umströmung des Seitenholms ist von Bedeutung, um einen niedrigen C_{w}-Wert, also einen geringen Luftwiderstandswert, in diesem Bereich sicher zu stellen was sich auch positiv auf den Gesamtluftwiderstandswerts des Fahrzeugs auswi rkt.

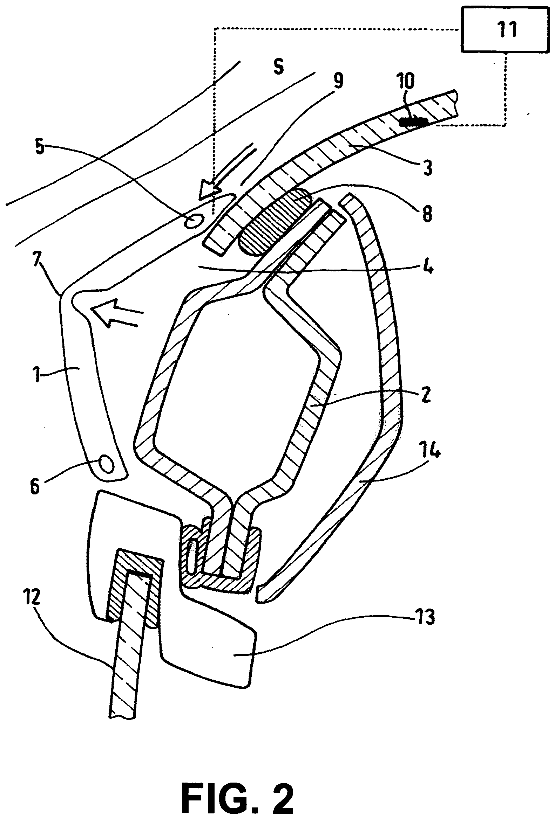

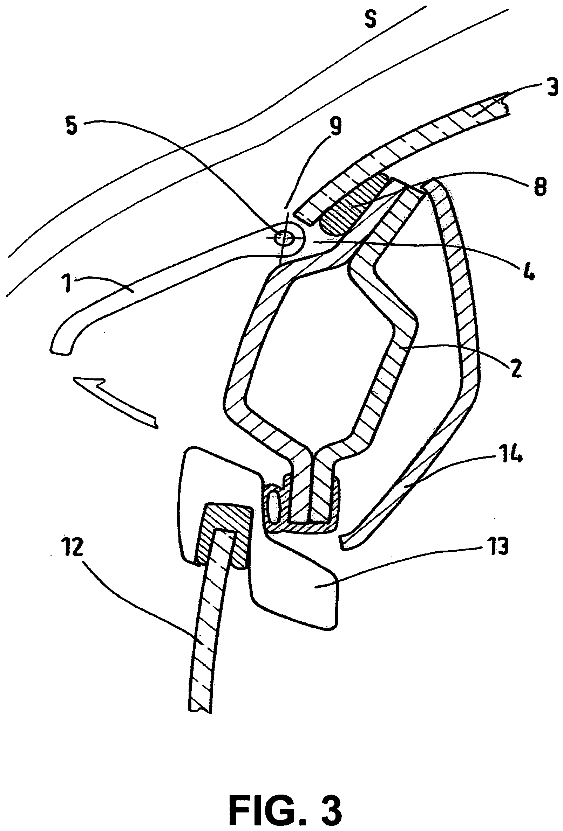

Unmittelbar angrenzende Bauteile, die in dieser Figur sowie den Figuren 2 und 3 dargestellt sind, aber keinen unmittelbaren Beitrag zur erfindungsgemäßen technischen Lösung liefern, der Vollständigkeit halber aber erwähnt werden sollen, sind ein Türrahmen 13, der unter anderem zur Aufnahme einer Seitenscheibe 12 dient, sowie eine Innenverkleidung 14 des als Fahrzeug-A-Säule ausgeführten Seitenholms 2. Das Verkleidungselement 1 ist beweglich gelagert und kann aus einer ersten Position, durch die eine zumindest wirbelarme Umströmung des Seitenholms 2 gewährleistet wird, in eine zweite Position, in der eine Ablösung der Fahrtwindströmung S und damit verbundene Wirbelbildung hervorgerufen wird, überführbar.
Das Verkleidungselement 1 verfügt über ein vorderes Lager 5 sowie ein hinteres Lager 6. Zwischen den beiden Lagern 5, 6 ist ein Gelenk 7 vorgesehen. In dem Übergangsbereich 4 zwischen der Frontscheibe 3 und dem Verkleidungselement 1 liegt das Verkleidungselement 1 unmittelbar durch eine Fensterdichtung 8 abgedichtet an der Fahrzeugfrontscheibe 3 an. Seitlich von der Fahrzeugfrontscheibe 3 abströmender Fahrtwind S sowie von diesem mitgerissenes Wasser, insbesondere Schmutzwasser, das seitlich von der Fahrzeugfrontscheibe 3 in Richtung des Verkleidungselementes 1 fließt, trifft im Anströmbereich 9 des Verkleidungselementes 1 auf und wird über das Verkleidungselement fortgeleitet.

Bei trockenem Wetter, wenn sich also keine Feuchtigkeit, insbesondere kein Wasser, Schnee und / oder Eis auf der Fahrzeugfrontscheibe 3 befindet, ist das Verkleidungselement 1 in der ersten Position, die eine glatte, wirbelarme Umströmung des Verkleidungselementes 1 der Fahrzeug-A-Säule 2 und somit einen niedringen C_{w}-Wert gewährleistet. Das Verkleidungselement ist hierbei derart in die Außenhaut der Fahrzeugkarosserie integriert, dass es mit den angrenzenden Karosserieaußenhautbauteilen eine im Wesentlichen ebene Oberfläche bildet.

Figur 2 zeigt das Verkleidungselement 1 in der gleichen Ansicht wie in Figur 1, allerdings ist das Verkleidungselement 1 nunmehr in eine zweite Position überführt worden. Insbesondere der mittlere Bereich des in zweiter, ausgeklappter Position befindlichen Verkleidungselements befindet sich in einer gegenüber der übrigen Fahrzeugkarosserieaußenhaut erhabenen Position.
In der Fahrzeugfrontscheibe 3 ist ferner ein Feuchtigkeitssensor 10 vorgesehen, der Feuchtigkeit auf der Fahrzeugfrontscheibe 3 detektiert und ein entsprechendes Signal an eine Fahrzeugsteuereinheit 11 gesendet hat. Auf der Grundlage des Signals ist das beweglich gelagerte Verkleidungselement 1 in die zweite Position überführt worden.

Bei der in Figur 2 gezeigten technischen Lösung wird das Verkleidungselement 1 im Bereich des Gelenks nach außen geknickt. Um eine entsprechende Bewegung zu verwirklichen, ist das hintere Lager 6 als zweiwertiges Festlager ausgeführt, das einen Drehpunkt bildet, während das vordere Lager 5 eine lineare Bewegung des Verkleidungselementes 1 ermöglicht. Der Anströmbereich 9 des Verkleidungselementes 1 wird in diesem Fall derart entlang der Fahrzeugfrontscheibe 3 bewegt, dass während der gesamten Zeit ein Kontakt zwischen dem vorderen Bereich des Verkleidungselementes 1 und der Fahrzeugfrontscheibe 3 besteht. Insbesondere hebt sich das Verkleidungselement nicht von der Fahrzeugfrontscheibe 3 ab. Auf diese Weise wird sichergestellt, dass keine Schmutz- und / oder Eispartikel zwischen das Verkleidungselement 1 und die Fahrzeugfrontscheibe 3 gelangen können.

Durch die Überführung des Verkleidungselementes 1 in die zweite Position weist das Verkleidungselement 1 eine geknickte Stellung auf, so dass die Fahrtwindströmung S, die seitlich von der Fahrzeugfrontscheibe 3 kommend entlang des Verkleidungselementes 1 strömt, im Bereich des Knicks, also an der Stelle, an der das Gelenk vorgesehen ist, vom Verkleidungselement 1 abhebt und verwirbelt. Durch diese Form des Verkleidungselementes 1 in der zweiten, ausgeklappten bzw. geknickten Position wird sichergestellt, dass Wasser mit samt dem Fahrtwindstrom S, insbesondere aufgrund einer Wirbelbildung, vom Verkleidungselement 1 abgehoben und zur Seite des Fahrzeugs weggedrückt wird. Somit wird auf zuverlässige Weise gewährleistet, dass kein Wasser, insbesondere kein Schmutzwasser von der Fahrzeugfrontscheibe 3 auf eine Seitenscheibe des Fahrzeugs gelangt.

Figur 3 stellt eine alternative Ausführungsform eines aus einer ersten in eine zweite Position überführbaren Verkleidungselementes 1 dar. Wesentlich an der dargestellten Ausführungsform ist erneut, dass das Verkleidungselement 1 in seinem vorderen, im Übergangsbereich 4 zwischen Fahrzeugfrontscheibe 3 und Verkleidungselement 1 vorgesehenen Bereich den Abstand zur Fahrzeugfrontscheibe 3 aufgrund seiner Bewegung nicht verändert. Bei der dargestellten technischen Lösung ist ein vorderes Lager 5 des Verkleidungselementes 1 vorgesehen, um das das Verkleidungselement 1 aus einer ersten Position in eine zweite Position herausgeklappt werden kann. Wird mit Hilfe eines Feuchtigkeitssensors 10 oder durch Betätigen des Scheibenwischers bzw. der Frontscheibenheizung durch den Fahrzeugführer ein Steuersignal generiert, so wird das Verkleidungselement 1 aus seiner ersten in die zweite Position überführt.

In dem in Figur 3 dargestellten Fall klappt das Verkleidungselement 1 nach Art eines steuerbaren Spoilers aus der Fahrzeugaußenhaut aus. Die Fahrtwindströmung S sowie das seitlich von der Fahrzeugfrontscheibe in Richtung des Verkleidungselementes 1 abströmende Wasser wird durch das ausgeklappte Verkleidungselement 1 seitlich vom Fahrzeug weggedrückt, ohne dass es auf im Seitenbereich des Fahrzeugs befindliche Scheiben gelangt.
Bei trockenem Wetter, sobald sich also keine Feuchtigkeit auf der Fahrzeugfrontscheibe 3 befindet, ist das Verkleidungselement 1 in seine erste Position in die Fahrzeugaußenhaut eingeklappt, so dass der Fahrtwind S den Seitenholm 2, der in der dargestellten Ausführungsform als Fahrzeug-A-Säule ausgeführt ist, umströmt, ohne dass es zu einer nennenswerten Wirbelbildung kommt.

Die in den Figuren dargestellten Ausführungsformen zeigen somit jeweils bewegliche Verkleidungselemente 1 von Seitenholmen 2, insbesondere von Fahrzeug-A-Säulen, die bei einer Fahrt des Fahrzeugs unter trocknen Bedingungen eben in die Fahrzeugaußenhaut integriert sind und sich erst bei Feuchtigkeitsbildung auf der Fahrzeugfrontscheibe bzw. Benutzung des Scheibenwischers derart aus der Fahrzeugaußenwand abheben, dass der Fahrtwindstrom im Bereich des Verkleidungselements abreist und / oder verwirbelt. In diesem Fall wird mit dem Fahrtwindstrom mitgeführte Feuchtigkeit seitlich vom Fahrzeug weggedrückt, ohne dass Feuchtigkeit und/oder Schmutz um den Seitenholm herum auf ein Seitenfenster des Fahrzeugs herumgeleitet wird. Der Seitenholm bzw. die Seitenholme sind in der Regel Teil eines Fensterrahmens, der zur Befestigung der Fahrzeugfrontscheibe über geeignete Flächen verfügt, auf die die Frontscheibe aufgeklebt wird.

Ein wie beschrieben beweglich ausgeführtes Verkleidungselement 1 stellt insbesondere zuverlässig sicher, dass auch bei Regen, Nebel, Schnee, Eis und/oder sich bildendem Spritzwasser eine Seitenscheibe des Fahrzeugs zuverlässig von Feuchtigkeit und/oder Schmutz, die von der Frontscheibe um einen Seitenholm geführt werden, freigehalten wird. Darüber hinaus wird die Umströmung der Seitenholme im Frontbereich eines Fahrzeugs nicht fortwährend gestört, sondern nur dann, wenn die Scheiben zuverlässig von Feuchtigkeit freigehalten werden müssen. Hierbei kann das bewegliche Verkleidungselement aus festem oder elastischem Material bestehen, um zuverlässig eine Vereisung der beweglichen Teile zu verhindern.

### Bezugszeichenliste

- 1: Verkleidungselement
- 2: Seitenholm
- 3: Frontscheibe
- 4: Übergangsbereich
- 5: Vorderes Lager
- 6: Hinteres Lager
- 7: Gelenk
- 8: Fensterdichtung
- 9: Anströmbereich
- 10: Sensor
- 11: Steuereinheit
- 12: Seitenscheibe
- 13: Türrahmen
- 14: Innenverkleidung
- S: Fahrtwindströmung

## Patentansprüche

1. Fensterrahmen zur Befestigung einer Fahrzeugfrontscheibe (3) an einer Fahrzeugkarosserie, der jeweils seitlich eines Fensterausschnitts angeordnete Seitenholme (2), einen oberhalb des Fensterausschnitts angeordneten oberen Querholm sowie einen unterhalb des Fensterausschnitts angeordneten unteren Querholm aufweist, wobei an wenigstens einem Seitenholm (2) ein Verkleidungselement (1) vorgesehen ist, das zumindest einen Übergangsbereich (4) zwischen Fahrzeugfrontscheibe (3) und Seitenholm (2) überdeckt und wenigstens zeitweise eine zumindest wirbelarme Umströmung des Übergangsbereichs (4) und/oder des Seitenholms (2) durch von der Fahrzeugfrontscheibe (3) seitwärts abströmenden Fahrtwind gewährleistet,
wobei das Verkleidungselement (1) im Anströmbereich (9) des Fahrtwindes einen zumindest weitgehend konstanten Abstand zur Fahrzeugfrontscheibe (3) aufweist, wenigstens teilweise beweglich angeordnet ist und derart gelagert ist, dass es aus einer ersten Position, die eine zumindest wirbelarme Umströmung wenigstens des Übergangsbereichs (4) sicherstellt, in eine zweite Position, die einen Strömungsabriss des seitwärts abströmenden Fahrtwinds hervorruft, überführbar ist,
wobei das Verkleidungselement (1) im vorderen, vom Fahrtwind angeströmten Bereich ein vorderes Lager (5) aufweist,
wobei das Verkleidungselement (1) in seinem, in Bezug auf die Strömungsrichtung des Fahrtwindes hinteren Bereich ein hinteres Lager (6) aufweist,
**dadurch gekennzeichnet, dass**
zwischen dem vorderen (5) und dem hinteren Lager (6) ein Gelenk (7) vorgesehen ist.

2. Fensterrahmen nach Anspruch 1,
**dadurch gekennzeichnet, dass** das Verkleidungselement (1) zumindest abschnittsweise ein flexibles Material aufweist.

3. Fensterrahmen nach Anspruch 1 oder 2,
**dadurch gekennzeichnet, dass** das Verkleidungselement (1) mehr als ein Gelenk (7) aufweist.

4. Fensterrahmen nach einem der Ansprüche 1 bis 3.
**dadurch gekennzeichnet, dass** ein Sensor (10) zur Erfassung eines Zustandsparameters der Fahrzeugscheibe (3) vorgesehen ist und das Verkleidungselement (1) unter Zugrundelegung des erfassten Zustandsparameters zwischen der ersten Position und der zweiten Position hin und/oder her bewegbar ist.

5. Fensterrahmen nach Anspruch 4,
**dadurch gekennzeichnet, dass** der Sensor (10) die Fahrzeugfrontscheibe (3) kontaktiert.

## Claims

1. Window frame for fastening a vehicle front window (3) to a vehicle body, which window frame has side pillars (2) each arranged to the side of a window cutout, an upper crossmember arranged above the window cutout, and a lower crossmember arranged below the window cutout, wherein a covering element (1) is provided on at least one side pillar (2), which covering element covers at least one transition region (4) between the vehicle front window (3) and side pillar (2) and at least intermittently ensures an at least low-turbulence flow around the transition region (4) and/or the side pillar (2) by relative wind flowing off sidewards from the vehicle front window (3), wherein the covering element (1) has, in the incident flow region (9) of the relative wind, an at least largely constant spacing from the vehicle front window (3), is arranged at least partially movably and is mounted in such a way that it can be transferred from a first position which ensures an at least low-turbulence flow around at least the transition region (4), into a second position which causes a flow separation of the relative wind flowing off sidewards,
wherein the covering element (1) has a front bearing (5) in the front region impinged by the relative wind, wherein the covering element (1) has a rear bearing (6) in its rear region with respect to the flow direction of the relative wind,
**characterized in that**
a joint (7) is provided between the front (5) and the rear bearing (6).

2. Window frame according to Claim 1,
**characterized in that** the covering element (1) comprises a flexible material at least in certain portions.

3. Window frame according to Claim 1 or 2,
**characterized in that** the covering element (1) has more than one joint (7).

4. Window frame according to one of Claims 1 to 3,
**characterized in that** a sensor (10) for detecting a state parameter of the vehicle window (3) is provided and, on the basis of the detected state parameter, the covering element (1) can be moved back and/or forth between the first position and the second position.

5. Window frame according to Claim 4,
**characterized in that** the sensor (10) is in contact with the vehicle front window (3).

## Revendications

1. Cadre pour la fixation d'un pare-brise de véhicule (3) à une carrosserie de véhicule, qui présente des montants latéraux (2) disposés chacun latéralement à une ouverture de fenêtre, une traverse supérieure disposée au-dessus de l'ouverture de fenêtre ainsi qu'une traverse inférieure disposée en dessous de l'ouverture de fenêtre, dans lequel il est prévu sur au moins un montant latéral (2) un élément de garnissage (1) qui recouvre au moins une région de transition (4) entre le pare-brise de véhicule (3) et le montant latéral (2) et qui garantit au moins temporairement un balayage au moins faiblement turbulent de la région de transition (4) et/ou du montant latéral (2) par le courant d'air s'écoulant latéralement à partir du pare-brise de véhicule (3),
dans lequel l'élément de garnissage (1) présente dans la région d'arrivée (9) du courant d'air une distance au moins largement constante par rapport au pare-brise de véhicule (3), est disposé de façon au moins partiellement mobile et est monté de telle manière qu'il puisse être déplacé d'une première position, qui assure un balayage au moins faiblement turbulent au moins de la région de transition (4), à une deuxième position, qui provoque un décollement de l'écoulement du courant d'air s'écoulant latéralement,
dans lequel l'élément de garnissage (1) présente un palier avant (5) dans la région avant recevant le courant d'air,
dans lequel l'élément de garnissage (1) présente un palier arrière (6) dans sa région arrière par rapport à la direction d'écoulement du courant d'air,
**caractérisé en ce qu'**il est prévu une articulation (7) entre le palier avant (5) et le palier arrière (6).

2. Cadre de pare-brise selon la revendication 1,
**caractérisé en ce que** l'élément de garnissage (1) présente au moins localement un matériau flexible.

3. Cadre de pare-brise selon la revendication 1 ou 2,
**caractérisé en ce que** l'élément de garnissage (1) présente plus qu'une articulation (7).

4. Cadre de pare-brise selon l'une quelconque des revendications 1 à 3, **caractérisé en ce qu'**il est prévu un capteur (10) pour détecter un paramètre d'état du pare-brise de véhicule (3) et l'élément de garnissage (1) est mobile réciproquement entre la première position et la deuxième position sur la base du paramètre d'état détecté.

5. Cadre de pare-brise selon la revendication 4,
**caractérisé en ce que** le capteur (10) est en contact avec le pare-brise de véhicule (3).
